# FASCICULE DE BREVET EUROPEEN

(11) **EP 2 031 255 B1**
(45) Date de publication et mention de la délivrance du brevet: **23.12.2015**
(21) Numéro de dépôt: 07115272.2
(22) Date de dépôt: 30.08.2007
(51) Int. Cl.: F04D 29/54

(54) **Aube, virole et ensemble pour etage redresseur de compresseur, turbomachine comprenant un tel compresseur et procede de montage par soudage entre une virole et une aube**
Leitschaufel, Ring und Anordnung der Gleichrichterstufe eines Kompressors, einen solchen Kompressor umfassende Strömungsmaschine und Montageverfahren durch Verschweißen von Ring und Leitschaufel
Vane, collar and assembly for synchronising ring stage of a compressor, turbomachine comprising such a compressor and method of assembly by welding between a collar and a vane.

(43) Date de publication de la demande: 04.03.2009
(73) Titulaire: Techspace Aero, 4041 Milmort Herstal (BE)
(72) Inventeur: Biemar, Guy, 4671 Blegne-Saive (BE)
(74) Mandataire: Cardy, Sophie Marie

(56) Documents cités:
- EP-A- 1 076 159
- EP-A- 1 219 785
- EP-A- 1 801 357
- DE-B- 1 200 070
- GB-A- 769 148

## Description

L'invention concerne une aube fixe et la virole extérieure d'un étage redresseur (ou étage statorique) d'une turbomachine telle qu'un turboréacteur ou turbopropulseur, la virole formant un carter supportant des séries d'aubes fixes entre lesquelles sont disposées des séries d'aubes mobiles en rotation autour d'un axe longitudinal, notamment pour un compresseur coaxial ou une turbine utilisé(e) dans un turboréacteur d'aviation.

La présente invention porte également sur un ensemble pour étage redresseur d'un compresseur coaxial, comprenant une virole extérieure et au moins une aube fixe, un compresseur coaxial fonctionnant à basse ou haute pression comportant un tel ensemble et la turbomachine comprenant un tel compresseur coaxial, une turbine comportant un tel ensemble et la turbomachine comprenant une telle turbine.

Egalement, la présente invention se rapporte au procédé de montage par soudage entre une virole extérieure et le sommet d'au moins une aube fixe.

Cette virole extérieure forme un tronçon de la limite radialement externe de la veine aérodynamique le long de laquelle l'air circule dans un des étages redresseur du compresseur ou de la turbine d'une turbomachine.

Pendant le fonctionnement d'un turboréacteur, en particulier pour les moteurs civils ou militaires actuels, compte tenu des risques d'entrée d'un corps étranger au niveau de l'étage redresseur, tel qu'un oiseau ou encore un morceau de pièce cassée provenant du turboréacteur lui-même, il est nécessaire d'assurer une solidité accrue pour la liaison rigide entre les aubes fixes et la virole extérieure.

Habituellement, cette solidarisation entre les aubes fixes et la virole extérieure est réalisée par des éléments d'attache avec des parties filetées, telles que des ensembles tiges filetées et boulons, comme décrit dans le document EP1801357.

Cependant il existe un certain nombre d'inconvénients si l'on utilise une tige filetée présente au niveau du sommet de l'aube, qui pénètre dans une ouverture de la virole, et qui est tenue par un écrou vissé du côté extérieur de la virole. En effet, dans ce cas la présence de filets induit des risques de rupture de ces filets, des coûts de fabrication correspondants et on doit prendre en compte la masse des écrous.

En outre, dans le cas des techniques connues de montage par soudage, on rencontre d'autres problèmes.

Ainsi, le document US5474419 prévoit notamment de souder les sommets des aubes fixes dans des ouvertures traversant la virole extérieure et présentant une forme complémentaire avec le sommet des aubes.

Cependant, puisqu'on doit, afin d'assurer la solidité exigée, réaliser une soudure qui relie la virole à une portion d'extrémité du sommet de l'aube dans toute l'épaisseur de matière de la virole extérieure, il se produit forcément, de par les techniques de soudage pouvant être mises en oeuvre, un bain de fusion dans toute l'épaisseur de matière de la virole, ce qui engendre des projections de gouttelettes de matière sur la face intérieure de la virole, donc dans la veine aérodynamique.

On comprend que ce type de soudage dans toute l'épaisseur crée des inconvénients parmi lesquels :
- une déformation des pièces soudées et en particulier de la virole extérieure,
- les projections de gouttelettes de matière créent, avec le cordon de soudure, des discontinuités de surface au niveau de la face intérieure de la virole extérieure, qui perturbe le flux et génère une perte de charge dans la veine aérodynamique, de sorte que pour retirer ces discontinuités de surface on doit à nouveau intervenir sur l'ensemble formé par la virole extérieure et les aubes fixes soudées, ce qui est complexe, engendre des coûts de fabrication supplémentaire et peut engendrer d'autres défauts mécaniques sur ces pièces,
- des tolérances strictes de fabrication pour respecter les dimensions et la position des ouvertures dans la virole extérieure, et
- des difficultés de fabrication liée à la forme complexe des portions d'extrémité des sommets des aubes et des ouvertures dans la virole extérieure que ce soit lors de l'usinage de ces éléments ou pour l'étape de soudage entre eux.

EP 1 076 159 est considéré comme le document décrivant l'état de la technique antérieure le plus proche.

La présente invention a pour objectif de fournir une solution permettant de surmonter les inconvénients de l'art antérieur et en particulier offrant la possibilité de ne pas rencontrer les problèmes précités inhérents à des techniques de fixation filetées ou à la mise en oeuvre d'un soudage dans toute l'épaisseur de la virole extérieure.

A cet effet, selon la présente invention, l'aube destinée à former une aube fixe d'un étage redresseur d'un compresseur coaxial, comprenant un pied et un sommet entre lesquels s'étend le corps de l'aube, est caractérisée en ce que le sommet comporte une plateforme surmontée par une partie en saillie sans filetage.

De façon préférentielle, ladite partie en saillie présente une forme circulaire, notamment ladite partie en saillie est un tronçon de cylindre qui peut être plein ou creux. Avantageusement, la face extérieure de la plateforme présente un relief autour de la partie en saillie, ce relief formant une protubérance ou un évidement annulaire.

Pour ce qui est de la plateforme, de préférence, elle présente un contour en forme de quadrilatère, en particulier ledit quadrilatère définissant le contour de la plateforme présente deux côtés inter-aubes qui sont opposés et parallèles entre eux et qui sont destinés à former des côtés jointifs avec le côté inter-aubes adjacent de la plateforme des deux aubes voisines.

Egalement, selon la présente invention, est prévue une virole extérieure pour l'étage redresseur d'un compresseur coaxial, dont la face intérieure délimite un logement annulaire au niveau duquel est disposée une série d'ouvertures, de préférence circulaires, alignées transversalement, ledit logement étant apte à recevoir le sommet d'aubes fixes comportant une plateforme surmontée par une partie en saillie sans filetage, ladite partie en saillie étant apte à pénétrer dans une desdites ouvertures, afin de permettre le montage de chaque aube fixe par soudage entre le bord d'une ouverture et le contour de la partie en saillie.

De cette manière, on comprend que l'on peut réaliser le montage entre la virole extérieure et le sommet de l'aube par soudage entre le bord d'une ouverture et le contour de la partie en saillie, tandis que la plateforme du sommet de l'aube étant située contre la face intérieure de la virole, elle protège la veine aérodynamique de toute projection de matière au moment de l'étape de soudage.

En outre, la présence de la plateforme du sommet de l'aube contre la face intérieure de la virole renforce la cohésion de l'ensemble grâce à l'appui entre ces deux pièces qui vient en complément de la soudure pour augmenter la solidité de la liaison mécanique entre elles.

Ce renforcement de la liaison mécanique est d'autant plus efficace que l'ensemble des plateformes des aubes d'un étage redresseur forment ainsi un anneau reçu dans le logement de la virole, cet anneau pouvant être monté de façon serrée dans le logement de la virole dans le cas où :
- le contour de ladite plateforme forme un quadrilatère dont deux côtés inter-aubes sont opposés et parallèles entre eux et sont destinés à former des côtés jointifs avec le côté inter-aubes adjacent de la plateforme des deux aubes voisines, ledit pas entre deux ouvertures adjacentes étant égal à la distance séparant les deux côtés inter-aubes des plateformes des aubes fixes, et
- les deux autres côtés, dits transversaux, de ladite plateforme en forme de quadrilatère sont glissés entre les bords annulaires du logement de la virole et se retrouvent disposés face à face, avec eux.

La configuration de l'invention selon laquelle le sommet des aubes présente une plateforme surmontée d'une partie en saillie permet d'avoir des ouvertures dans la virole de taille plus petite que dans l'état de la technique antérieure selon le document US5474419. De plus, la soudure étant symétrique (de forme circulaire), les déformations induites dans la virole sont moins importantes.

De cette façon, il est possible de prévoir que lesdites ouvertures sont moins écartées entre elles, de sorte que l'on peut monter un nombre plus important d'aubes par étage redresseur que dans l'état de la technique antérieure. A titre d'exemple, on prévoit que lesdites ouvertures sont écartées entre elles d'un pas égal à la largeur de la plateforme des aubes fixes.

En outre, lorsque ladite partie en saillie présente une forme circulaire et que lesdites ouvertures sont circulaires il est alors plus facile non seulement de fabriquer ces portions de l'aube et de la virole, mais en outre on dispose d'un degré de liberté en rotation lors du montage qui facilite le bon positionnement de la plateforme par rapport à la virole, en particulier dans le logement, afin de placer de façon jointive les côtés inter-aubes adjacents de la plateforme de deux aubes voisines.

Selon la présente invention, on forme ainsi un ensemble pour étage redresseur d'un compresseur coaxial, comprenant une virole extérieure présentant des ouvertures alignées transversalement, pour le montage d'aubes fixes, et au moins une aube fixe dont le sommet est monté par soudage dans une desdites ouvertures de la virole extérieure, caractérisé en ce que le sommet de ladite aube comporte une plateforme surmontée par une partie en saillie sans filetage et en ce que ladite partie en saillie est reçue dans une desdites ouvertures préalablement à l'étape de soudage de sorte que la face extérieure de la plateforme est en appui contre la face intérieure de la virole, un cordon de soudure étant formé sur la face extérieure de la virole en reliant le bord de l'ouverture au contour de la partie en saillie.

De préférence, la face intérieure de la virole délimite un logement annulaire au niveau duquel sont disposées les ouvertures, ledit logement étant apte à recevoir les plateformes des aubes fixes de l'étage redresseur.

L'invention se rapporte également à un étage redresseur pour un compresseur coaxial comprenant au moins un ensemble tel que présenté précédemment, un compresseur coaxial comprenant un tel étage redresseur ainsi qu'une turbomachine comprenant un tel compresseur coaxial, une turbine comportant un tel ensemble et la turbomachine comprenant une telle turbine.

La présente invention concerne aussi le procédé de montage par soudage entre une virole extérieure et le sommet d'au moins une aube fixe, qui est caractérisé en ce qu'il comporte les étapes suivantes :
- on fournit une aube comprenant un pied et un sommet entre lesquels s'étend le corps de l'aube, le sommet comportant une plateforme surmontée par une partie en saillie sans filetage ;
- on fournit une virole extérieure présentant des ouvertures alignées transversalement dont le contour est sensiblement le même que le contour de la partie en saillie de chaque aube,
- on loge la partie en saille de chaque aube dans une des ouvertures de sorte que la face extérieure de la plateforme vienne en appui contre la face intérieure de la virole, et
- on effectue le soudage entre la virole et l'aube depuis la face extérieure de la virole, le long du bord de l'ouverture, de façon à solidariser tout le contour de la partie en saillie à la virole, ainsi qu'une petite partie de la plateforme entourant la partie en saillie.

Le soudage peut être réalisé par toute technique de soudage disponible, notamment un soudage par faisceau d'électrons, un soudage au laser (tel que CO2 à forte puissance) ou un soudage à l'arc de type TIG...........

De préférence, les ouvertures et le contour des parties en saillie sont circulaires et la face intérieure de la virole extérieure délimite un logement annulaire au niveau duquel est disposée la série d'ouvertures alignées transversalement, ledit logement étant apte à recevoir la plateforme de chaque aube.

De cette manière, on comprend que par le recours à une forme circulaire pour les contours des surfaces à souder, on met en oeuvre une étape de soudage simple à réaliser qui va procurer un cordon de soudure homogène et éviter de créer des contraintes susceptibles de déformer en particulier la virole.

La solution selon la présente invention présente aussi l'avantage supplémentaire, de permettre, outre la simplification du procédé de montage (lors de la mise en place et lors du soudage) entre la virole et chaque aube et un renforcement mécanique de la liaison entre ces pièces, l'implantation d'un nombre maximal d'aubes fixes dans chaque étage redresseur.

Globalement, grâce à la solution selon la présente invention, il est possible de réaliser un positionnement fiable de chaque aube fixe par rapport à la virole et d'installer un nombre maximal d'aubes fixes par étage redresseur tout en assurant une grande solidité de la liaison entre la virole et chaque aube fixe.

D'autres avantages et caractéristiques de l'invention ressortiront à la lecture de la description suivante faite à titre d'exemple et en référence aux dessins annexés dans lesquels :
- la figure 1 est une vue générale en section partielle de l'étage de compression d'un turboréacteur à double flux ,
- la figure 2 est une vue partielle en perspective d'une virole extérieure sur laquelle trois aubes fixes sont disposées mais non encore soudées, depuis la face intérieure de la virole,
- la figure 3 est une vue partielle en perspective du même agencement que la figure 2 mais depuis la face extérieure de la virole,
- la figure 4 représente la position relative des trois aubes des figures 2 et 3, ce qui correspond à la vue de la figure 3 sans la virole, et
- la figure 5 est une vue partielle en section axiale de l'ensemble formé par la virole sur laquelle est montée une aube, avant l'opération de soudage.

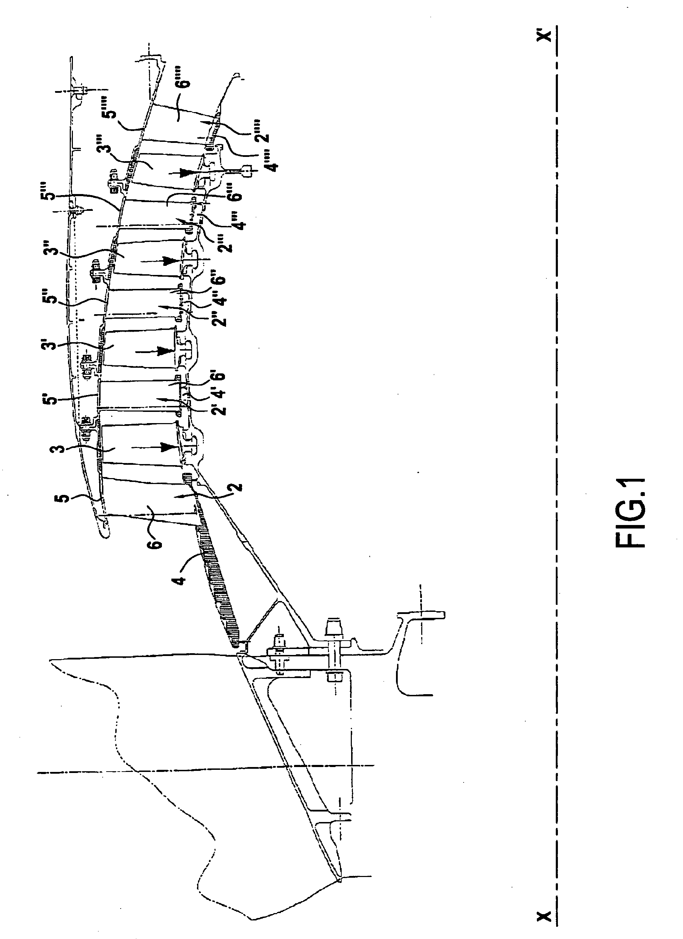

Grâce à la figure 1, on visualise un exemple d'application de la présente invention pour chaque étage redresseur ou étage statorique 2, 2', 2", 2"', 2"", intercalé entre chaque série d'aubes mobiles 3, 3', 3", 3"', du compresseur d'un turboréacteur à double flux.

Ainsi l'étage redresseur 2 comporte une virole extérieure 5 et une virole intérieure 4 concentriques entre lesquelles est montée une série d'aubes fixes 6.

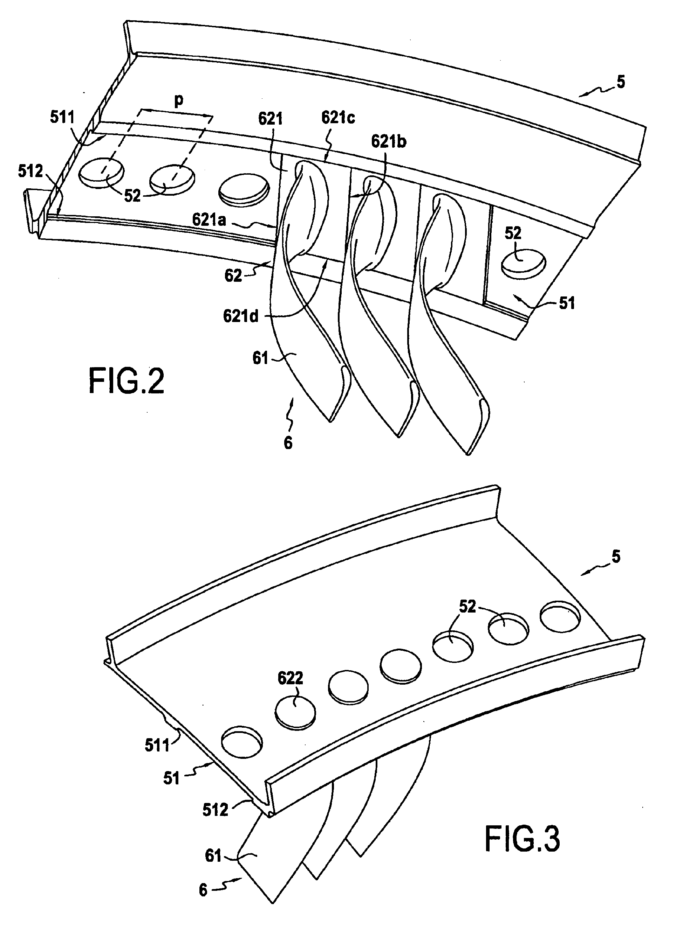

Dans la suite de la description, on considère un exemple de mise en oeuvre de la solution selon la présente invention pour solidariser le sommet des aubes fixes 6 à la virole extérieure 5, illustré sur les figures 2 à 5.

Comme toutes les aubes fixes qui constituent l'étage redresseur 2 considéré, l'aube 6 est reliée par son pied à la virole intérieure 4 et par son sommet 62 à la virole extérieure 5, le corps de l'aube 61 s'étendant entre le pied et le sommet 62.

Au niveau du sommet 62, le corps de l'aube 61 se prolonge par une plate-forme 621 présentant la forme d'un quadrilatère, plus précisément d'un parallélogramme, cette plate-forme 621 étant surmontée d'une partie en saillie 622 en forme de tronçon de cylindre de section circulaire.

Le diamètre de la partie en saillie 622 est plus faible que la largeur I de la plate-forme 621 (distance entre les côtés inter-aubes 621a et 621b).

En outre, la partie en saillie 622 est située dans le prolongement géométrique du sommet 62 de l'aube 6.

La virole extérieure 5 présente, sur sa face intérieure, un logement 51 annulaire délimité par un bord aval 511 et un bord amont 512 circulaires et coaxiaux à l'axe du moteur. La largeur du logement 51, correspondant à la distance entre le bord aval 511 et le bord amont 512, correspond à la longueur L de la plate-forme 621 entre les côtés transversaux 621c et 621d de la plate-forme 621.

Entre les bords aval 511 et amont 512 , le logement 51 présente une série circonférentielle d'ouvertures circulaires radiales 52 espacées entre elles angulairement de façon équidistante avec un pas p égal à la distance entre les côtés inter-aubes 621a et 621b ou largeur I de la plateforme 621.

Avant l'étape de soudage, chaque aube 6 est montée sur la virole extérieure 5 en disposant la partie en saillie 622 dans une ouverture 52, les côtés transversaux 621c et 621d de la plate-forme 621 venant s'appuyer respectivement contre les bords circulaires aval 511 et amont 512 du logement 51 de la virole extérieure 5. De cette façon, les côtés transversaux 621c et 621d de chaque plate-forme 621 s'alignent sur deux cercles disposés de façon orthogonale par rapport à l'axe moteur et décalés axialement.

Au fur et à mesure de la pose des aubes 6 dans le logement 51, les côtés inter-aubes 621a et 621b viennent en contact avec un côté inter-aubes 621a ou 621b de l'aube voisine, ce qui forment un ensemble de plateformes 51 jointives par leurs côtés inter-aubes 621a et 621b, en constituant un anneau remplissant le logement 51 de la virole extérieure 5.

Ceci est possible par le fait que le logement 51 annulaire présente un diamètre correspondant à un multiple de la largeur I des plates-formes 621, lesquelles sont avantageusement légèrement cintrées selon une courbure qui se centre autour de l'axe du moteur lorsque les plateformes 621 sont montées dans le logement 51 annulaire.

Dans cette configuration, on identifie trois séries de faces qui se correspondent :
- la face extérieure des plates-formes 621 est en appui contre le fond du logement 51 annulaire de la virole extérieure,
- les côtés inter-aubes 621a et 621b des plates-formes 621 viennent en contact entre eux deux à deux, et
- les deux autres côtés formés des côtés transversaux 621c et 621d des plates-formes 621 sont glissés respectivement entre les bords circulaires aval 511 et amont 512 du logement 51 de la virole extérieure 5.

Du fait de la dispersion des dimensions des plateformes 621 et du logement 51 dans la virole extérieure 5 due aux tolérances de fabrication, il peut y avoir un jeu que l'on essaye de limiter au maximum, de sorte que toutes les faces précitées qui se correspondent ne sont pas toutes en contact entre elles. Ce qui compte, c'est une complémentarité de forme, aux tolérances de fabrication près de sorte qu'après montage, les plateformes 621 des aubes épousent la forme de la face intérieure de la virole extérieure 5, ou plus précisément du logement 51 de la virole extérieure 5.

La face intérieure de la virole extérieure 5 peut être usinée de manière à délimiter le logement 51 sous forme d'une gorge de forme cylindrique ou sphérique. La face extérieure des plateformes 621 présente une forme complémentaire, à savoir soit une portion de cylindre, soit une portion de sphère, dont le rayon peut différer de celui de la virole. En effet, la courbure de la face extérieure de la plateforme 621 peut être supérieure à celle de la face intérieure du logement 51 de la virole extérieure 5, de manière à ce qu'un serrage soit nécessaire pour mettre l'aube 6 en place

Ensuite on réalise l'étape de soudage, par exemple par faisceau d'électrons, entre le bord circulaire de l'ouverture 52 et le contour circulaire de diamètre légèrement inférieur de la partie en saillie 622. On relève que la réalisation d'un cordon de soudure circulaire est simple et permet d'avoir une soudure et donc une liaison mécanique homogène.

De cette façon, le bain de fusion peut atteindre l'épaisseur de la partie en saillie 622 sans s'étendre radialement jusqu'à la face intérieure de la plate-forme 621, ce qui garantit que la veine aérodynamique n'est pas perturbée par des modifications de l'état de surface de la face intérieure de la virole 5.

Lors de cette étape de soudage, outre une solidarisation de tout le contour de la partie en saillie 622 à l'ouverture 52 de la virole 5, une portion annulaire 621e de la plateforme 621 entourant la partie en saillie 622 est soudée par transparence, c'est-à-dire dans son épaisseur, à la portion annulaire correspondante de la virole 5, qui entoure l'ouverture 52 et qui se trouve placée derrière le logement annulaire 51.

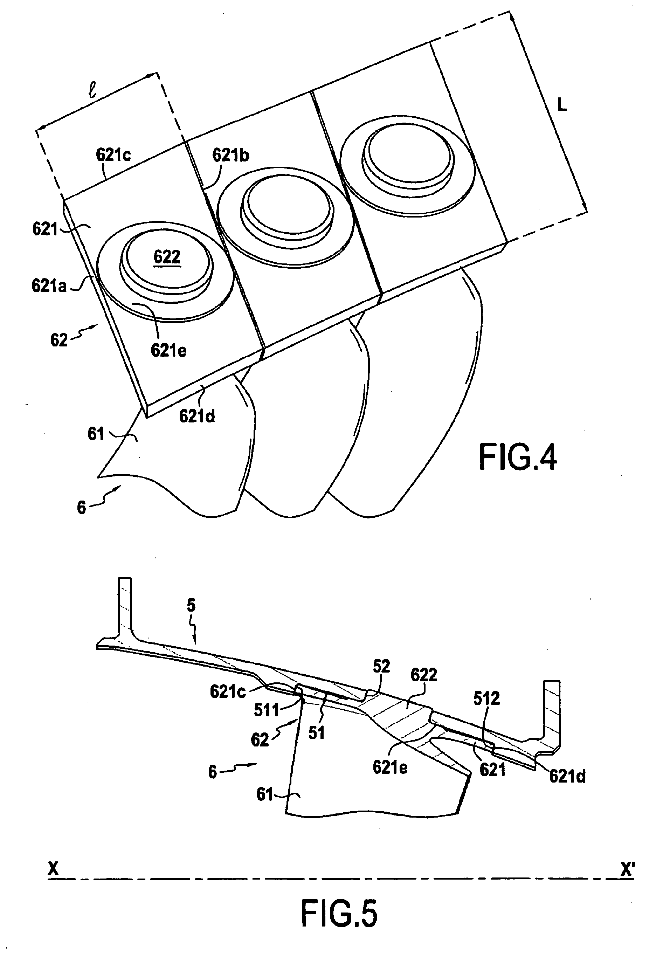

Une protubérance plate ou un évidement peut être usiné(e) sur la face extérieure de la plateforme 621, autour de la partie en saillie 622. Sur la figure 5, on a représenté le cas où la portion annulaire 621e de la plateforme 621 entourant la partie en saillie 622 est une protubérance plate annulaire, qui est en saillie par rapport au reste de la face extérieure de la plateforme 621. De cette façon, cette partie en relief formée de la portion annulaire 621e forme un bain de fusion venant adhérer à la face intérieure du logement 51 de la virole extérieure 5.

Si l'on prévoit que la face extérieure de la plateforme 621 présente un évidement autour de la partie en saillie 622, il se remplit lors de l'opération de soudure par la matière en fusion.

Ainsi, seules des variations dimensionnelles inhérentes au procédé de forgeage et d'usinage préalables à l'étape de soudage peuvent créer des irrégularités dans la veine, mais pas, contrairement aux procédés de soudage de l'art antérieur, du fait que le bain de fusion inhérent à l'étape de soudage entraîne la projection de gouttelettes de matière sur la face intérieure de la virole qui se place dans la veine aérodynamique.

Comme il apparaît sur les figures 2 à 5, la portion du corps 61 de l'aube adjacente à plate-forme 621 dépasse du contour de cette plate-forme 621, c'est-à-dire que la projection de cette portion du corps 61 de l'aube dépasse du quadrilatère délimitant la plate-forme 621. Cette configuration géométrique n'est pas gênante puisque selon l'invention c'est l'ensemble formé de la plateforme 621 et de la virole extérieure 5 qui protège le corps 61 de l'aube contre les dégâts du faisceau de soudure, ce qui n'était pas le cas dans l'état de l'art antérieur où l'on soudait en bord de plateforme. Ici, le fait que l'aube dépasse de la plateforme n'est plus un problème puisqu'il n'y a plus de risque de blessure de l'aube par le faisceau de soudure.

Pour garantir une liaison sur toute l'épaisseur du bord de l'ouverture 52, on prévoit que la partie en saillie 622 présente une épaisseur un peu plus importante que l'épaisseur de la virole à l'emplacement du logement 51, et plus précisément à l'emplacement des ouvertures 52.

Cette situation engendre la persistance, après soudage, d'un ressaut (non représenté) le long du cordon de soudure, la partie en saille 622 restant légèrement en surplomb de la surface extérieure de la virole extérieure 5.

Grâce à l'invention, les soudures viennent en complément des trois séries de faces en correspondance mentionnées précédemment, pour former un assemblage isostatique, ce qui créer une structure mécaniquement renforcée dans toutes les directions.

## Revendications

1. Aube (6) destinée à former une aube fixe d'un étage redresseur (2) d'une turbomachine, comprenant un pied et un sommet entre lesquels s'étend le corps (61) de l'aube (6), **caractérisée en ce que** le sommet (62) comporte une plateforme (621) prolongeant le corps (61) et surmontée par une partie en saillie (622) sans filetage de sorte que lorsque ladite partie en saillie (622) est reçue dans une ouverture (52) d'une virole extérieure (5), la face extérieure de la plateforme (621) est en appui contre la face intérieure de la virole (5).

2. Aube (6) selon la revendication 1, **caractérisée en ce que** ladite partie en saillie (622) est située dans le prolongement du sommet (62) de l'aube (6).

3. Aube (6) selon l'une quelconque des revendications précédentes, **caractérisée en ce que** ladite partie en saillie (622) présente une forme circulaire et **en ce que** le diamètre de la partie en saillie (622) est plus faible que la largeur l de la plateforme (621).

4. Aube (6) selon la revendication 3, **caractérisée en ce que** ladite partie en saillie (622) est un tronçon de cylindre.

5. Aube (6) selon l'une quelconque des revendications précédentes, **caractérisée en ce que** la face extérieure de la plateforme (621) présente un relief (621e) autour de la partie en saillie (622).

6. Aube (6) selon l'une quelconque des revendications 1 à 4, **caractérisée en ce que** la face extérieure de la plateforme (621) présente un évidement autour de la partie en saillie (622).

7. Aube (6) selon l'une quelconque des revendications précédentes, **caractérisée en ce que** ladite plateforme (621) présente un contour en forme de quadrilatère.

8. Aube (6) selon la revendication 7, **caractérisée en ce que** ledit quadrilatère définissant le contour de la plateforme (621) présente deux côtés inter-aubes (621a, 621b) qui sont opposés et parallèles entre eux et qui sont destinés à former des côtés jointifs avec le côté inter-aubes (621a, 621b) adjacent de la plateforme (621) des deux aubes (6) voisines.

9. Virole extérieure (5) pour l'étage redresseur d'une turbomachine, dont la face intérieure délimite un logement (51) annulaire au niveau duquel est disposée une série d'ouvertures (52) alignées transversalement, ledit logement (51) étant apte à recevoir le sommet (62) d'aubes (6) fixes comportant une plateforme (621) prolongeant le corps (61) et surmontée par une partie en saillie (622) sans filetage qui est apte à pénétrer dans une desdites ouvertures (52), afin de permettre le montage de chaque aube (6) fixe par soudage entre le bord d'une ouverture et le contour de la partie en saillie (622).

10. Virole selon la revendication 9, **caractérisée en ce que** les ouvertures (52) sont circulaires.

11. Ensemble pour étage redresseur d'une turbomachine, comprenant une virole extérieure (5) présentant des ouvertures (52) alignées transversalement, pour le montage d'aubes (6) fixes, et au moins une aube (6) fixe dont le sommet (62) est monté par soudage dans une desdites ouvertures (52) de la virole extérieure (5), **caractérisé en ce que** le sommet (62) de ladite aube (6) comporte une plateforme (621) surmontée par une partie en saillie (622) sans filetage et **en ce que** ladite partie en saillie (622) est reçue dans une desdites ouvertures (52) préalablement à l'étape de soudage de sorte que la face extérieure de la plateforme (621) est en appui contre la face intérieure de la virole, un cordon de soudure étant formé sur la face extérieure de la virole en reliant le bord de l'ouverture (52) au contour de la partie en saillie (622).

12. Ensemble selon la revendication 11, **caractérisé en ce que** ladite partie en saillie (622) présente une forme circulaire et ce que lesdites ouvertures (52) sont circulaires.

13. Ensemble selon l'une des revendications 11 à 12, **caractérisé en ce que** lesdites ouvertures (52) sont écartées entre elles d'un pas égal à la largeur de la plateforme (621) des aubes (6) fixes.

14. Ensemble selon l'une des revendications 11 à 13, **caractérisé en ce que** le contour de ladite plateforme (621) forme un quadrilatère dont deux côtés inter-aubes (621a, 621b) sont opposés et parallèles entre eux et sont destinés à former des côtés jointifs avec le côté inter-aubes (621a, 621b) adjacent de la plateforme (621) des deux aubes (6) voisines.

15. Ensemble selon les revendications 13 et 14, **caractérisé en ce que** ledit pas entre deux ouvertures (52) adjacentes est égal à la distance séparant les deux côtés inter-aubes (621a, 621b) des plateformes (621) des aubes (6) fixes.

16. Ensemble selon l'une des revendications 11 à 15, **caractérisé en ce que** la face intérieure de la virole délimite un logement (51) annulaire au niveau duquel sont disposées les ouvertures (52), ledit logement (51) étant apte à recevoir les plateformes (621) des aubes (6) fixes de l'étage redresseur.

17. Etage redresseur pour un compresseur coaxial comprenant au moins un ensemble selon l'une des revendications 11 à 16.

18. Compresseur coaxial comprenant un étage redresseur selon la revendication 17.

19. Turbomachine comprenant un compresseur coaxial selon la revendication 18.

20. Etage redresseur pour une turbine comprenant au moins un ensemble selon l'une des revendications 11 à 16.

21. Turbine comprenant un étage redresseur selon la revendication 20.

22. Turbomachine comprenant une turbine selon la revendication 21.

23. Procédé de montage par soudage entre une virole extérieure (5) et le sommet (62) d'au moins une aube (6) fixe, **caractérisé en ce qu'**il comporte les étapes suivantes :
- on fournit une aube (6) comprenant un pied et un sommet (62) entre lesquels s'étend le corps (61) de l'aube (6), le sommet (62) comportant une plateforme (621) surmontée par une partie en saillie (622) sans filetage ;
- on fournit une virole extérieure (5) présentant des ouvertures (52) alignées transversalement dont le contour est sensiblement le même que le contour de la partie en saillie (622) de chaque aube (6),
- on loge la partie en saille de chaque aube (6) dans une des ouvertures (52) de sorte que la face extérieure de la plateforme (621) vienne en appui contre la face intérieure de la virole, et
- on effectue le soudage entre la virole et l'aube (6) depuis la face extérieure de la virole, le long du bord de l'ouverture, de façon à solidariser tout le contour de la partie en saillie (622) à la virole.

24. Procédé de montage selon la revendication 23, **caractérisé en ce que** les ouvertures (52) et le contour des parties en saillie sont circulaires.

25. Procédé de montage selon la revendication 24, **caractérisé en ce que** la face intérieure de la virole extérieure (5) délimite un logement (51) annulaire au niveau duquel est disposée la série d'ouvertures (52) alignées transversalement, ledit logement (51) étant apte à recevoir la plateforme (621) de chaque aube (6).

## Patentansprüche

1. Schaufel (6), die dazu bestimmt ist, eine Leitschaufel einer Leitstufe (2) einer Turbomaschine zu bilden, umfassend einen Fuß und eine Spitze, zwischen denen sich der Körper (61) der Schaufel (6) erstreckt, **dadurch gekennzeichnet, dass** die Spitze (62) eine Plattform (621) umfasst, welche den Körper (61) fortsetzt und über der sich ein vorspringender, gewindeloser Teil (622) erhebt, so dass, wenn der vorspringende Teil (622) in einer Öffnung (52) eines Außenrings (5) aufgenommen ist, die Außenseite der Plattform (621) an der Innenseite des Rings (5) in Anlage ist.

2. Schaufel (6) nach Anspruch 1, **dadurch gekennzeichnet, dass** der vorspringende Teil (622) in der Verlängerung der Spitze (62) der Schaufel (6) gelegen ist.

3. Schaufel (6) nach einem der vorhergehenden Ansprüche, **dadurch gekennzeichnet, dass** der vorspringende Teil (622) eine Kreisform aufweist und dass der Durchmesser des vorspringenden Teils (622) geringer als die Breite I der Plattform (621) ist.

4. Schaufel (6) nach Anspruch 3, **dadurch gekennzeichnet, dass** der vorspringende Teil (622) ein Zylinderabschnitt ist.

5. Schaufel (6) nach einem der vorhergehenden Ansprüche, **dadurch gekennzeichnet, dass** die Außenseite der Plattform (621) eine Erhebung (621 e) um den vorspringenden Teil (622) herum aufweist.

6. Schaufel (6) nach einem der Ansprüche 1 bis 4, **dadurch gekennzeichnet, dass** die Außenseite der Plattform (621) eine Ausnehmung um den vorspringenden Teil (622) herum aufweist.

7. Schaufel (6) nach einem der vorhergehenden Ansprüche, **dadurch gekennzeichnet, dass** die Plattform (621) eine viereckförmige Kontur aufweist.

8. Schaufel (6) nach Anspruch 7, **dadurch gekennzeichnet, dass** das die Kontur der Plattform (621) definierende Viereck zwei Zwischenschaufelseiten (621 a, 621 b) aufweist, die entgegengesetzt gerichtet und parallel zueinander sind und die dazu bestimmt sind, aneinanderstoßende Seiten mit der angrenzenden Zwischenschaufelseite (621 a, 621 b) der Plattform (621) der beiden benachbarten Schaufeln (6) zu bilden.

9. Außenring (5) für die Leitstufe einer Turbomaschine, dessen Innenseite eine ringförmige Aufnahme (51) begrenzt, im Bereich derer eine Reihe von quer ausgerichteten Öffnungen (52) angeordnet ist, wobei die Aufnahme (51) geeignet ist, die Spitze (62) von Leitschaufeln (6) aufzunehmen, die eine Plattform (621) umfasst, welche den Körper (61) fortsetzt und über der sich ein vorspringender, gewindeloser Teil (622) erhebt, der geeignet ist, in eine der Öffnungen (52) einzudringen, um das Anschweißen einer jeden Leitschaufel (6) zwischen dem Rand einer Öffnung und der Kontur des vorspringenden Teils (622) zu ermöglichen.

10. Ring nach Anspruch 9, **dadurch gekennzeichnet, dass** die Öffnungen (52) kreisförmig sind.

11. Anordnung für eine Leitstufe einer Turbomaschine, umfassend einen quer ausgerichtete Öffnungen (52) aufweisenden Außenring (5) für die Montage von Leitschaufeln (5) sowie wenigstens eine Leitschaufel (6), deren Spitze (62) in einer der Öffnungen (52) des Außenrings (5) angeschweißt ist, **dadurch gekennzeichnet, dass** die Spitze (62) der Schaufel (6) eine Plattform (621) umfasst, über der sich ein vorspringender, gewindeloser Teil (622) erhebt, und dass der vorspringende Teil (622) vor dem Schweißschritt in einer der Öffnungen (52) so aufgenommen wird, dass die Außenseite der Plattform (621) an der Innenseite des Rings in Anlage ist, wobei eine Schweißnaht an der Außenseite des Rings unter Verbinden des Randes der Öffnung (52) mit der Kontur des vorspringenden Teils (622) gebildet ist.

12. Anordnung nach Anspruch 11, **dadurch gekennzeichnet, dass** der vorspringende Teil (622) eine Kreisform aufweist und dass die Öffnungen (52) kreisförmig sind.

13. Anordnung nach einem der Ansprüche 11 bis 12, **dadurch gekennzeichnet, dass** die Öffnungen (52) um einen Abstand, der gleich der Breite der Plattform (621) der Leitschaufeln (6) ist, untereinander beabstandet sind.

14. Anordnung nach einem der Ansprüche 11 bis 13, **dadurch gekennzeichnet, dass** die Kontur der Plattform (621) ein Viereck bildet, von dem zwei Zwischenschaufelseiten (621 a, 621 b) entgegengesetzt gerichtet und parallel zueinander sind und dazu bestimmt sind, aneinanderstoßende Seiten mit der angrenzenden Zwischenschaufelseite (621 a, 621 b) der Plattform (621) der beiden benachbarten Schaufeln (6) zu bilden.

15. Anordnung nach den Ansprüchen 13 und 14, **dadurch gekennzeichnet, dass** der Abstand zwischen zwei angrenzenden Öffnungen (52) gleich dem Abstand, der die beiden Zwischenschaufelseiten (621 a, 621 b) der Plattformen (621) der Leitschaufeln (6) trennt, ist.

16. Anordnung nach einem der Ansprüche 11 bis 15, **dadurch gekennzeichnet, dass** die Innenseite des Rings eine ringförmige Aufnahme (51) begrenzt, in deren Bereich die Öffnungen (52) angeordnet sind, wobei die Aufnahme (51) geeignet ist, die Plattformen (621) der Leitschaufeln (6) der Leitstufe aufzunehmen.

17. Leitstufe für einen Koaxial-Verdichter, die wenigstens eine Anordnung nach einem der Ansprüche 11 bis 16 umfasst.

18. Koaxial-Verdichter, der eine Leitstufe nach Anspruch 17 umfasst.

19. Turbomaschine, die einen Koaxial-Verdichter nach Anspruch 18 umfasst.

20. Leitstufe für eine Turbine, die wenigstens eine Anordnung nach einem der Ansprüche 11 bis 16 umfasst.

21. Turbine, die eine Leitstufe nach Anspruch 20 umfasst.

22. Turbomaschine, die eine Turbine nach Anspruch 21 umfasst.

23. Verfahren zur Schweißmontage zwischen einem Außenring (5) und der Spitze (62) wenigstens einer Leitschaufel (6), **dadurch gekennzeichnet, dass** es die folgenden Schritte umfasst:
- Bereitstellen einer Schaufel (6), die einen Fuß und eine Spitze (62) umfasst, zwischen denen sich der Körper (61) der Schaufel (6) erstreckt, wobei die Spitze (62) eine Plattform (621), über der sich ein vorspringender, gewindeloser Teil (622) erhebt, umfasst,
- Bereitstellen eines Außenrings (5), der quer ausgerichtete Öffnungen (52) aufweist, deren Kontur im Wesentlichen die gleiche wie die Kontur des vorspringenden Teils (622) einer jeden Schaufel (6) ist,
- Aufnehmen des vorspringenden Teils einer jeden Schaufel (6) in einer der Öffnungen (52), so dass die Außenseite der Plattform (621) an der Innenseite des Rings in Anlage gelangt, und
- Vollziehen des Schweißens zwischen dem Ring und der Schaufel (6) von der Außenseite des Rings aus, entlang des Randes der Öffnung, um die gesamte Kontur des vorspringenden Teils (622) mit dem Ring fest zu verbinden.

24. Montageverfahren nach Anspruch 23, **dadurch gekennzeichnet, dass** die Öffnungen (52) und die Kontur der vorspringenden Teile kreisförmig sind.

25. Montageverfahren nach Anspruch 24, **dadurch gekennzeichnet, dass** die Innenseite des Außenrings (5) eine ringförmige Aufnahme (51) begrenzt, im Bereich derer die Reihe von quer ausgerichteten Öffnungen (52) angeordnet ist, wobei die Aufnahme (51) geeignet ist, die Plattform (621) einer jeden Schaufel (6) aufzunehmen.

## Claims

1. A vane (6) for forming a stator vane of a stator stage (2) of a turbomachine, the vane comprising a root and a tip with the body (61) of the vane (6) extending between them, the vane being **characterized in that** the tip (62) includes a platform (621) extending the body (61) and surmounted by a non-threaded projecting portion (622), such that when said projecting portion (622) is received in an opening (52) of an outer shroud (5), the outside face of the platform (621) bears against the inside face of the shroud (5).

2. A vane (6) according to claim 1, **characterized in that** said projecting portion (622) is situated extending the tip (62) of the vane (6).

3. A vane (6) according to any preceding claim, **characterized in that** said projecting portion (622) is circular in shape and **in that** the diameter of the projecting portion (622) is smaller than the width ℓ of the platform (621).

4. A vane (6) according to claim 3, **characterized in that** the projecting portion (622) is a cylindrical segment.

5. A vane (6) according to any preceding claim, **characterized in that** the outside face of the platform (621) presents a portion in relief (621e) around the projecting portion (622).

6. A vane (6) according to any one of claims 1 to 4, **characterized in that** the outside face of the platform (621) presents a recess around the projecting portion (622).

7. A vane (6) according to any preceding claim, **characterized in that** said platform (621) presents an outline in the shape of a quadrilateral.

8. A vane (6) according to claim 7, **characterized in that** said quadrilateral defining the outline of the platform (621) presents two inter-vane sides (621a, 621b) that are opposite and mutually parallel and that are to form sides touching the inter-vane sides (621a, 621b) adjacent to the platform (621) of the two neighboring vanes (6).

9. An outer shroud (5) for the stator stage of a turbine engine, its inside face defining an annular housing (51) having a series of transversely-aligned openings (52) formed therein, said housing (51) being suitable for receiving the tips (62) of stator vanes (6), each including a platform (621) extending its body (61) and surmounted by a non-threaded projecting portion (622) suitable for penetrating into one of said openings (52) in order to enable each stator vane (6) to be mounted by welding between the edge of an opening and the outline of the projecting portion (622).

10. A shroud according to claim 9, **characterized in that** the openings (52) are circular.

11. An assembly for a stator stage of a turbine engine, the assembly comprising an outer shroud (5) presenting transversely-aligned openings (52) for mounting stator vanes (6), and at least one stator vane (6) having its tip (62) mounted by welding in one of said openings (52) of the outer shroud (5), the assembly being **characterized in that** the tip (62) of said vane (6) includes a platform (621) surmounted by a non-threaded projecting portion (622), and **in that** said projecting portion (622) is received in one of said openings (52) prior to the welding step, in such a manner that the outside face of the platform (621) presses against the inside face of the shroud, a bead of welding being formed on the outside face of the shroud connecting together the edge of the opening (52) and the outline of the projecting portion (622).

12. An assembly according to claim 11, **characterized in that** said projecting portion (622) is circular in shape and **in that** said openings (52) are circular.

13. An assembly according to claim 11 or claim 12, **characterized in that** said openings (52) are spaced apart from one another at a pitch equal to the width of the platforms (621) of the stator vanes (6).

14. An assembly according to any one of claims 11 to 13, **characterized in that** the outline of said platform (621) forms a quadrilateral having two inter-vane sides (621a, 621b) that are opposite and mutually parallel and that are to form sides touching the inter-vane sides (621a, 621b) adjacent to the platform (621) of two neighboring vanes (6).

15. An assembly according to claims 13 and 14, **characterized in that** said pitch between two adjacent openings (52) is equal to the distance between the two inter-vane sides (621a, 621b) of the platforms (621) of the stator vanes (6).

16. An assembly according to any one of claims 11 to 15, **characterized in that** the inside face of the shroud defines an annular housing (51) having the openings (52) formed therein, said housing (51) being suitable for receiving the platforms (621) of the stator vanes (6) of the stator stage.

17. A stator stage for a coaxial compressor including at least one assembly according to any one of claims 11 to 16.

18. A coaxial compressor including a stator stage according to claim 17.

19. A turbomachine including a coaxial compressor according to claim 18.

20. A stator stage for a turbine including at least one assembly according to any one of claims 11 to 16.

21. A turbine including a stator stage according to claim 20.

22. A turbomachine including a turbine according to claim 21.

23. An assembly method for welding together an outer shroud (5) and the tip (62) of at least one stator vane (6), the method being **characterized in that** it comprises the following steps:
· providing a vane (6) having a root and a tip (62) with the body (61) of the vane (6) extending between them, the tip (62) having a platform (621) surmounted by a non-threaded projecting portion (622);
· providing an outer shroud (5) presenting transversely-aligned openings (52) of outline that is substantially the same as the outline of the projecting portion (622) of each vane (6);
· receiving the projecting portion of each vane (6) in one of the openings (52) so that the outside face of the platform (621) comes to bear against the inside face of the shroud; and
· welding together the shroud and the vane (6) from the outside face of the shroud along the edge of the opening so as to bond the entire outline of the projecting portion (622) to the shroud.

24. An assembly method according to claim 23, **characterized in that** the openings (52) and the outlines of the projecting portions are circular.

25. An assembly method according to claim 24, **characterized in that** the inside face of the outer shroud (5) defines an annular hosing (51) in which the series of transversely-aligned openings (52) is arranged, said housing (51) being suitable for receiving the platforms (621) of each of the vanes (6).
